(19) Europäisches Patentamt
European Patent Office
Office européen des brevets

(11) **EP 2 467 683 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **10740187.9**

(22) Anmeldetag: **21.07.2010**

(51) Internationale Patentklassifikation (IPC):
*G01F 23/284* (2006.01)     *H01Q 13/02* (2006.01)
*H01Q 13/24* (2006.01)      *G01S 7/03* (2006.01)
*H01Q 1/22* (2006.01)       *G01S 13/88* (2006.01)
*H01Q 1/00* (2006.01)

(52) Gemeinsame Patentklassifikation (CPC):
**G01S 13/88; G01F 23/284; G01S 7/032;
H01Q 1/002; H01Q 1/225; H01Q 13/02;
H01Q 13/24**

(86) Internationale Anmeldenummer:
**PCT/EP2010/060519**

(87) Internationale Veröffentlichungsnummer:
**WO 2011/020668 (24.02.2011 Gazette 2011/08)**

(54) **MESSGERÄT DER PROZESSAUTOMATISIERUNGSTECHNIK ZUR ERMITTLUNG UND ÜBERWACHUNG EINER CHEMISCHEN ODER PHYSIKALISCHEN PROZESSGRÖßE IN EINEM HOCHTEMPERATUR-PROZESS IN EINEM BEHÄLTER**

MEASURING INSTRUMENT FOR A PROCESS AUTOMATION TECHNIQUE FOR DETERMINING AND MONITORING A CHEMICAL OR PHYSICAL PROCESS VARIABLE IN A HIGH-TEMPERATURE PROCESS IN A CONTAINER

APPAREIL DE MESURE POUR L'AUTOMATISATION D'UN PROCESSUS, DESTINÉ À DÉTERMINER ET SURVEILLER UNE VALEUR MESURÉE CHIMIQUE OU PHYSIQUE D'UN PROCESSUS À HAUTE TEMPÉRATURE À L'INTÉRIEUR D'UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **18.08.2009 DE 102009028620**

(43) Veröffentlichungstag der Anmeldung:
**27.06.2012 Patentblatt 2012/26**

(73) Patentinhaber: **Endress+Hauser SE+Co. KG
79689 Maulburg (DE)**

(72) Erfinder:
• **BERGMANN, Eric
79585 Steinen (DE)**

• **FEISST, Klaus
79252 Stegen (DE)**

(74) Vertreter: **Andres, Angelika Maria
Endress+Hauser Group Services
(Deutschland) AG+Co. KG
Colmarer Straße 6
79576 Weil am Rhein (DE)**

(56) Entgegenhaltungen:
**EP-A2- 1 869 418        WO-A1-2009/129997
US-A1- 2003 201 842      US-A1- 2005 253 751
US-A1- 2008 134 778**

EP 2 467 683 B1

**Beschreibung**

Die vorliegende Erfindung betrifft ein Messgerät der Prozessautomatisierungstechnik zur Ermittlung und Überwachung einer chemischen oder physikalischen Prozessgröße in einem Hochtemperatur-Prozess in einem Behälter, wobei das Messgerät zumindest aus einem im Prozess befindlichen Sensorelement und zumindest aus einem außerhalb des Prozesses befindlichen Messumformer ausgestaltet ist, wobei zumindest ein erstes Dichtelement zur Abdichtung gegen das Eindringen des Prozessmediums innerhalb des Sensorelements vorgesehen ist.

Messgeräte werden häufig in der Automations- und Prozesssteuerungstechnik eingesetzt, um eine Prozessgröße wie z.B. Durchfluss, Füllstand, Druck und Temperatur oder eine andersartige physikalische und/oder chemische Prozessgröße in einem Prozessablauf zu ermitteln. Die Anmelderin ist im Bereich der industriellen Automations- und Prozesssteuerungstechnik tätig und stellt industrielle Messgeräte, bzw. Feldgeräte her. Sie vertreibt diese Feldgeräte z.B. zur Füllstandsbestimmung eines Mediums in einem Behälter u. a. unter dem Namen Micropilot, Levelflex oder Deltapilot.

Eine bekannte Messmethode aus einer Vielzahl von Messmethoden zur Ermittlung des Füllstands in einem Behälter ist die Laufzeit-Messmethode. Bei dieser Messmethode werden beispielsweise Mikrowellen über eine Antennenvorrichtung ausgesendet und die an der Mediumsoberfläche reflektierten Echowellen detektiert, wobei die Laufzeit des Messsignals ein Maß für den Abstand ist. Aus der halben Laufzeit lässt sich demgemäß der Füllstand des Mediums in einem Behälter ermitteln. Die Echokurve stellt hierbei den gesamten Signalverlauf als Funktion der Zeit dar, wobei jeder Messwert der Echokurve der Amplitude eines in einem bestimmten Abstand an einer Oberfläche reflektierten Echosignals entspricht. Die Laufzeit-Messmethode wird im Wesentlichen in zwei Ermittlungsverfahren eingeteilt: Bei der Zeitdifferenzmessung wird die Zeit, die ein breitbandiger Wellensignalimpuls für eine zurückgelegte Wegstrecke benötigt, ermittelt. Bei der Kippfrequenzdifferenzmessung (FMCW-Frequency-Modulated Continuous Wave) wird das ausgesendete, frequenzmodulierte Hochfrequenzsignal zum reflektierten, empfangenen, frequenzmodulierten Hochfrequenzsignal ermittelt. Im Weiteren wird keine Beschränkung auf ein spezielles Ermittlungsverfahren gemacht.

Bei bestimmten Prozessanwendungen sind die Messgeräte bzw. deren Sensorelemente extremen Bedingungen, wie z.B. hohen Temperaturen, hohen Drücken und/oder chemisch aggressiven Stoffen, ausgesetzt. Insbesondere Mikrowellen-Füllstandsmessgeräte weisen temperatur- und/oder druckempfindliche Bauteile auf, wie beispielsweise eine Messgerätelektronik und Sende- und/oder Empfangselemente für die Mikrowellen.

Als temperaturbeständiges Material werden im Hochtemperaturbereich überwiegend Aluminiumoxid-Keramik und/oder bis 250°C hochtemperaturbeständige Kunststoffe, wie z.B. Polyetherketone (PEEK) als Prozesstrennelement im Sensorelement eingesetzt.

Die Prozessabdichtung dieser Prozesstrennelemente im Sensorelement wird bei Keramiken meist durch eine Lötung und/oder Graphitstopfbuchspackungen realisiert. Bei Einsatz von Kunststoffen als Prozesstrennelementen werden hochtemperaturbeständige Fluor-Elastomere, wie beispielsweise Perfluorkautschuk (FFKM oder FFPM), die unter dem Namen Kalrez verkauft werden, als Dichtelement sehr nahe am heißen Prozess eingesetzt.

Um die Messelektronik im Messumformer vor den hohen Temperaturen und Drücken, sowie vor den aggressiven chemischen Stoffen zu schützen sind die Sensorelemente prozessseitig mit Dichtelementen hermetisch abgedichtet. Durch das Einfügen eines hermetisch dichten Dichtelements in den Hohlleiter einer Hornantenne wird die größtmöglichste Sicherheit gewährleistet, da ein zweites "Sicherheitselement" den Prozess bei einer Trennung der modularen messaktiven Teile, wie z.B. einer Einkoppeleinheit/Erregerelement oder der Messgeräteelektronik, von dem messpassiven Teile, wie z.B. der Antenne, aufgrund einer Wartung oder Reparatur, verschließt.

In den Veröffentlichungsschriften US 2003/0201842 A1 und WO 2009/129997 A1 wird jeweils ein Füllstandsmessgerät offenbart, das auf Basis von geführtem Radar (TDR, "Time Domain Reflectometry") arbeitet, wobei deren stabförmige Sensorelemente Keramik-basierte Dichtungen umfassen. Bei dem in WO 2009/129997 A1 gezeigten TDR-Füllstandsmessgerät ist das stabförmige Sensorelement zudem zweiteilig mit zwischenliegenden Gummi-Dichtelementen ausgelegt. Ein TDR-basiertes Füllstandsmessgerät, dessen zweiteiliges Sensorelement durch eine Schweißnaht verbunden ist, wird in der europäischen Veröffentlichungs-Schrift EP1869 418 A2 gezeigt. Auch in der US-Veröffentlichungsschrift 2008/134778 A1 wird ein TDR-basiertes Füllstandsmessgerät beschrieben, wobei dessen Sensorelement zur thermischen Isolation Kühlrippen aufweist.

In der US 2005/0253751 A1 ist ein modularer Aufbau einer Hornantenne beschrieben. Das Prozesstrennelement ist in der Form eines keramischen Anpasskegels, der durch Graphitpackungsringe abgedichtet in den Hohlleiter eingebracht ist, ausgebildet.

Nachteilig an den angeführten Ausführungsbeispielen einer Prozessabdichtung des Sensorelements, bzw. dessen Prozessanschlusses gegen das sich im Prozess befindliche Medium nach den aus dem Stand der Technik bekannten Methoden, ist:

- dass das Einlöten oder Einglasen des Prozesstrennelements zur Abdichtung gegen das Medium im Prozess sehr aufwendig und teuer ist, sowie nur bei Keramiken angewendet werden kann.

- dass Graphitstopfbuchspackungen insbesondere bei hohen Temperaturen nicht die erforderliche Dichtheit aufweisen, da die Permeation von Prozess-medium durch die Graphitstopfpackung bei höheren Temperaturen nicht mehr vernachlässigbar ist.
- dass die Elastomere im Temperaturbereich > 200°C nicht dauerbeständig sind und mit steigender Temperatur sehr schnell zunehmend Alterungs- und demzufolge Undichtigkeitserscheinungen aufweisen.

Der Erfindung liegt daher die Aufgabe zugrunde, ein Messgerät mit einer sicheren Abdichtung vorzuschlagen, die eine hohe thermische Beständigkeit aufweist und die insbesondere kostengünstig und einfach herzustellen ist.

Diese Aufgabe wird durch die Merkmale des Anspruchs 1 gelöst.

Gemäß einer vorteilhaften Ausführungsform der erfindungsgemäßen Lösung wird vorgeschlagen, dass an der Grenzstelle das Verhältnis zwischen dem hohen thermischen Widerstand im ersten Bereich des Sensorelements und dem niedrigen thermischen Widerstand im zweiten Bereich des Sensorelements zumindest den Wert zwei oder größer aufweist.

Eine alternative Ausgestaltung zur erfindungsgemäßen Lösung schlägt vor, dass der hohe thermische Widerstand im ersten Bereich des Sensorelements durch eine Geometrieänderung mittels der Minimierung einer ersten Querschnittsfläche des Sensorelements und/oder Vergrößerung der Länge des ersten Bereichs realisiert ist und/oder dass der niedrige thermische Widerstand im zweiten Bereich des Sensorelements durch eine Geometrieänderung mittels der Maximierung einer zweiten Querschnittsfläche des Sensorelements und/oder der Reduzierung der Länge des zweiten Bereichs, ausgestaltet ist.

Eine weitere vorteilhafte Ausgestaltung der Vorrichtung der Erfindung ist darin zu sehen, dass der erste Bereich und der zweite Bereich des Sensorelements einteilig aus einem Material mit einer spezifischen Wärmeleitfähigkeitskonstanten ausgestaltet sind.

Eine sehr vorteilhafte Variante der erfindungsgemäßen Lösung ist darin zu sehen, dass der zweite Bereich des Sensorelements und der erste Bereich des Sensorelements durch die Verwendung von unterschiedlichen Materialien mit verschiedenen spezifischen Wärmeleitfähigkeitskonstanten ausgestaltet sind.

Gemäß einer günstigen Ausgestaltung der erfindungsgemäßen Vorrichtung wird angeregt, dass zumindest eine elektrische Steckverbindung und/oder ein elektronisches Bauelement als temperaturempfindliches Element an der Grenzstelle zwischen dem zweiten Bereich des Sensorelements und dem ersten Bereich des Sensorelements ausgestaltet sind.

Eine besonders vorteilhafte Weiterbildung der erfindungsgemäßen Lösung schlägt vor, dass ein zweites Dichtelement in einem Abstand von einem Viertel der Wellenlänge zum ersten Dichtelement angeordnet ist.

Gemäß einer günstigen Ausgestaltung der erfindungsgemäßen Vorrichtung wird angeregt, dass zumindest das erste Dichtelement und/oder zweite Dichtelement als Niedrigtemperatur-O-Ring-Dichtung aus beispielsweise Fluor-Kautschuk, Fluorkarbon-Kautschuk, Tetrafluorethylen und/oder Perfluorpropylen ausgestaltet ist.

Gemäß einer günstigen Ausgestaltung der erfindungsgemäßen Vorrichtung wird angeregt, dass ein drittes Dichtelement, insbesondere eine Graphitstopfpackung, in Nähe des Prozesses am Sensorelement als ein zusätzliches Sicherheits-Dichtelement vorgesehen ist.

Eine sehr vorteilhafte Variante der erfindungsgemäßen Lösung ist darin zu sehen, dass das Sensorelement als Antenneneinheit mit zumindest einem Hohlleiter zur Bestimmung des Füllstandes eines Mediums in einem Behälter ausgestaltet ist, dessen Hohlraum durch einen dielektrischen Füllkörper zumindest teilweise ausgefüllt ist und dass die Dichtelemente des Sensorelements zwischen dem Hohlleiter und dem Füllkörper ausgestaltet sind.

Eine vorteilhafte Ausgestaltung der erfindungsgemäßen Lösung schlägt vor, dass das Sensorelement als Sondeneinheit mit zumindest einer Messsonde zur Bestimmung des Füllstandes eines Mediums in einem Behälter ausgestaltet ist und dass die Dichtelemente des Sensorelements zwischen der Messsonde und einer koaxialen Prozesseinkopplung ausgestaltet sind.

Die Prozessdichtung, beispielsweise bei Füllstandsmessgeräten, die nach dem Laufzeitmessverfahren von Mikrowellen die Distanz zum Medium ermitteln, ist üblicherweise zwischen der Einkopplung der koaxialen Signalführung in den Hohlleiter des Sensorelements und dem abstrahlenden Element, z.B. einer Hornantenne des Sensorelements, angeordnet.

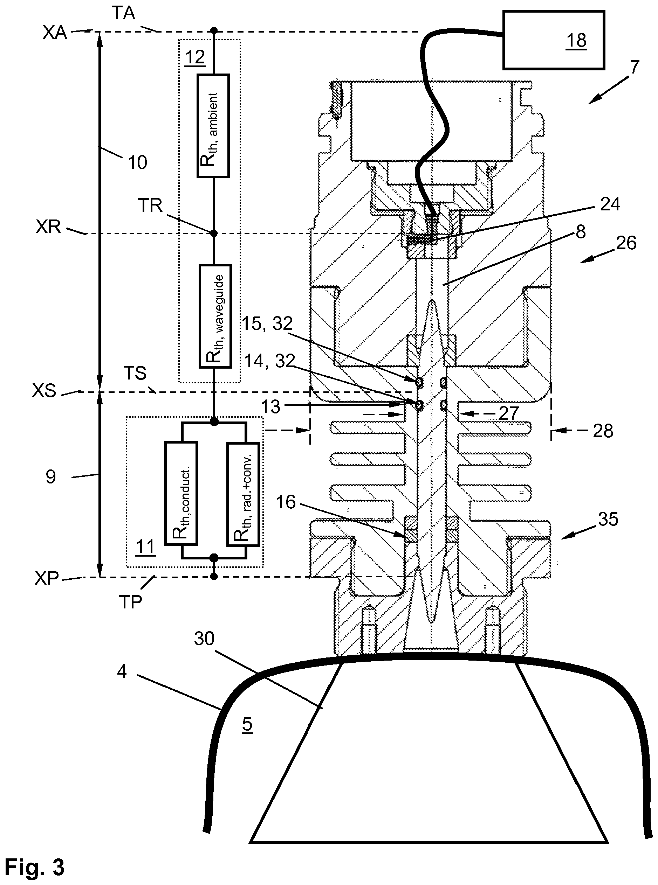

Diese Prozessdichtung soll verhindern, dass Medium aus dem Prozess in die empfindliche Einkoppelstruktur und den Messumformer eindringen und/oder in die Umgebung austreten kann. Dabei dient dieser Hohlleiter im Sensorelement nicht nur der Signalleitung und als Aufnahme für das abdichtende dielektrische Füllmaterial, sondern auch als thermische Entkopplung zwischen dem heißen Prozessflansch und der temperaturempfindlichen Elektronik im Messumformer-Gehäuse. Der Wärmefluss zwischen Prozess über Sensorelement und Messumformer-Gehäuse zur Umgebung lässt sich als einfache Serienschaltung thermischer Widerstände darstellen. Diese Serienschaltung von Widerständen ist in Fig. 3 dargestellt.

Das allseits bekannte Problem, dass die bekannten Methoden zur Abdichtung des Prozesstrennelements im Hohlleiter eines Sensorelements eines Mikrowellen-Füllstandmessgeräts Dichtigkeitsprobleme bei Temperaturen oberhalb von 200°C aufweisen und/oder, wie die Einlötung oder die Einglasung des Prozesstrennelements, nur beschränkt anwendbar sind, wird erfindungsgemäß dadurch gelöst, dass zumindest ein Dichtelement an einer Stelle im Sensorelement eingebracht wird, an der es aufgrund von starken geometrischen oder materiellen Veränderungen zu einem Sprung im thermischen Widerstand kommt. Diese Grenzstelle zwischen einem ersten Bereich zwischen Dichtung und Prozess mit einem hohen thermischen Widerstand und dem zweiten Bereich zwischen Dichtung und Umgebung, bzw. Messumformergehäuse mit einem niedrigen thermischen Widerstand, wird beispielsweise mittels einer starken Querschnittsveränderung des Sensorelements, bzw. des Prozessanschlusses erreicht. Der thermische Widerstand über das Messumformergehäuse zur Umgebung ist in der Regel bekannt und verändert sich nur geringfügig

Die Vorteile der Erfindung gegenüber dem Stand der Technik sind:

- dass die Dichtelemente und somit die Sensorelemente aufgrund der reduzierten einwirkenden Temperatur eine verlängerte Lebensdauer und niedrigere Leckraten aufweisen,
- dass durch die Reduzierung der Temperatur im Bereich der Dichtung auf kostengünstige und bewährte Materialien für Dichtelemente zurückgegriffen werden kann, und
- dass Hochtemperaturkunststoffe, wie beispielsweise Polyetheretherketone (PEEK), die nach derzeitigem Wissensstand mittels Verlötung oder mittels einer

Graphitstopfbuchspackungen nicht abgedichtet werden können, einsetzbar sind. Weitere Einzelheiten, Merkmale und Vorteile des Gegenstandes der Erfindung ergeben sich aus der nachfolgenden Beschreibung mit den zugehörigen Zeichnungen, in denen bevorzugte Ausführungsbeispiele der Erfindung dargestellt sind. Die Bauteile oder Bauteilgruppen der in den Figuren dargestellten Ausführungsbeispiele, die sich in ihrem Aufbau und/oder in ihrer Funktion entsprechen, sind zur besseren Übersicht und zur Vereinfachung mit gleichen Bezugszeichen versehen. Es zeigen:

Fig. 1    eine schematische Darstellung eines ersten Ausführungsbeispiels eines Füllstandsmessgeräts der Prozessmesstechnik mit einer Antenneneinheit als Sensorelement,

Fig. 2    eine schematische Darstellung eines zweiten Ausführungsbeispiels eines Füllstandsmessgeräts der Prozessmesstechnik mit einer Messsonde als Sensorelement,

Fig. 3    eine schematische Darstellung eines erfindungsgemäßen Sensorelements des ersten Ausführungsbeispiels eines Füllstandsmessgeräts der Prozessmesstechnik mit einer Antenneneinheit aus Fig. 1 und

Fig. 4    eine schematische Darstellung eines Temperaturprofils des Sensorelements aus Fig. 3.

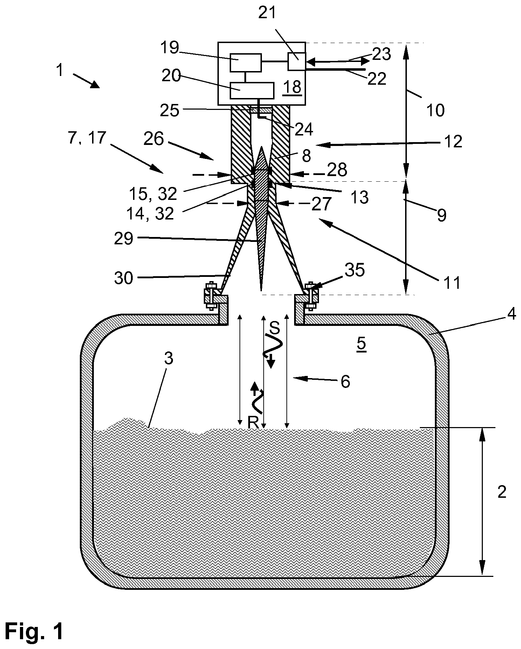

Fig. 1 zeigt ein erstes Ausführungsbeispiel eines erfindungsgemäßen Messgeräts 1 der Prozessmesstechnik, das beispielsweise zur Ermittlung des Füllstands 2 eines Mediums 3 in einem Behälter 4 eingesetzt wird.

Das Sensorelement 17 des Messgeräts 1 ist Prozess 5 - berührend am Behälter 4 und der Messumformer 18 ist außerhalb des Prozesses angeordnet. Das Sensorelement 17 wird in Hochtemperatur-Prozessen 5 zumindest bereichsweise der im Prozess 5 vorliegenden Temperatur von einigen hundert Grad Celsius ausgesetzt. Allgemein ist man bestrebt, die hochtemperaturempfindlichen Teile des Messgeräts 1, wie zum Beispiel die Elektronik, außerhalb des Prozesses 5 im Messumformer 18 unterzubringen. Jedoch ist es in einigen Fällen notwendig auch recht prozessnah einige temperaturempfindliche Elemente 32 im Sensorelement 17 aufzunehmen. Als temperaturempfindliche Elemente 32 sind hier beispielsweise Dichtelemente 14, 15 zur Prozessabdichtung, elektrische Steckverbindungen und/oder elektronische Bauelemente, wie beispielsweise Signalvorverstärker zur Verstärkung des Messsignals 6 oder Optokoppler zur galvanischen Trennung, anzusehen.

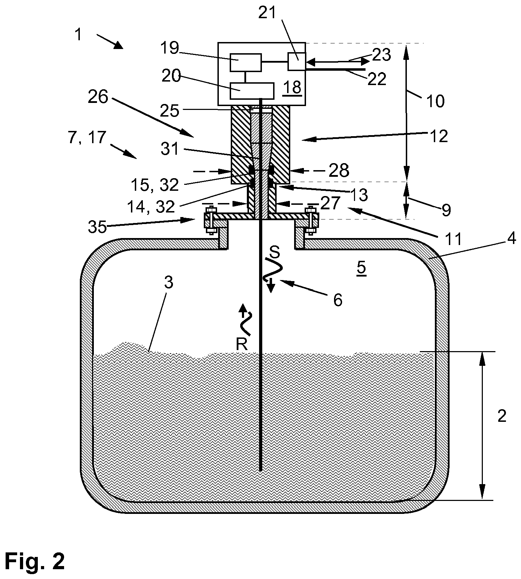

Erfindungsgemäß weist das Sensorelement 17 eine Grenzstelle 13 zwischen einem dem Prozess 5 zugewandten ersten Bereich 9 mit einem hohen thermischen Widerstand 11 und einem dem Prozess 5 abgewandten zweiten Bereich 10 mit einem niedrigen thermischen Widerstand 12 auf. An dieser Grenzstelle 13 im Sensorelement 17 ist das temperaturempfindliche Element 32, wie beispielsweise ein Dichtelement in Form eines Niedertemperatur-O-Ring-Dichtelementes 14,15 aus Fig. 1 und Fig. 2, ausgestaltet. Dieses temperaturempfindliche Element 32 kann auch in einer geringfügigen Entfernung von dieser Grenzstelle 13 angeordnet sein.

Das Verhältnis an der Grenzstelle 13 zwischen dem hohen thermischen Widerstand 11 im ersten Bereich 9 des Sensorelements 17 und dem niedrigen thermischen Widerstand 12 im zweiten Bereich 10 des Sensorelements 17 beträgt beispielsweise zumindest zwei. Der Unterschied in den thermischen Widerständen 11, 12 kann beispielsweise durch zwei verschiedene Maßnahmen erreicht werden, die gleichzeitig oder einzeln ausgeführt werden können:
Als erste Maßnahme wird beispielsweise eine Geometrieänderung an der Grenzstelle 13 des Sensorelements 17 vorgenommen. Hierzu wird beispielsweise mittels einer Minimierung der ersten Querschnittsfläche 27 des Sensorelements 17 und/oder Vergrößerung der Länge des ersten Bereichs 9, sowie mittels der Maximierung der zweiten Querschnittsfläche 28 des Sensorelements 17 und/oder der Reduzierung der Länge des zweiten Bereichs 10 der Unterschied in den thermischen Widerständen 11, 12 erreicht. Dabei ist in diesem Fall das Sensorelement 17 einteilig aus einem Material mit einer festen, spezifischen Wärmeleitfähigkeitskonstante ausgestaltet.

Eine weitere Maßnahme ist, eine Materialänderung bzw. Materialmodifikation an der Grenzstelle 13 vorzunehmen, so dass der zweite Bereich 10 des Sensorelements 17 und der erste Bereich 9 des Sensorelements 17 durch die Verwendung von unterschiedlichen Materialien mit verschiedenen spezifischen Wärmeleitfähigkeitskonstanten ausgestaltet sind.

Das Füllstandmessgerät 1 besteht grundlegend aus einem Sensorelement 17 mit einer Antenneneinheit 7 und einem Messumformer 18. Die Antenneneinheit 7 bzw. das Sensorelement 17 weisen in diesem Ausführungsbeispiel einen dielektrischen Füllkörper 29 als Prozesstrennelement im Hohlleiter 8 auf. Das Füllstandsmessgerät 1 ermittelt beispielsweise nach der Laufzeit-Messmethode den Füllstand 2 eines Mediums 3, bzw. eines Füllguts in einem Behälter 4. Die Antenneneinheit 7 ist in diesem Ausführungsbeispiel als eine Hornantenne ausgebildet, welche sich in zwei grundlegende Funktionseinheiten, - die Prozesseinkopplung 26 und das Abstrahlelement 30, - aufgliedern lässt.

In der industriellen Messtechnik werden prinzipiell dielektrische Stabantennen, Parabolantennen, Planarantennen und Hornantennen als Abstrahlelemente 30 zum Senden und/oder Empfangen von freiabgestrahlten Mikrowellen-Messsignalen eingesetzt.

Typischerweise wird insbesondere bei Antenneneinheiten 7 mit Hornantennen und Stabantennen ein topfartiges Gehäuse als Prozesseinkopplung 26 verwendet, das die Geometrie eines kurzgeschlossenen Hohlleiters 8 aufweist. In diese Prozesseinkopplung 26 ist ein Erregerelement 24 eingeführt, über den Mikrowellen 6 durch den Hohlleiter 8 hindurch gesendet und/oder empfangen werden. Bei einer Hornantenne schließt sich an den Hohlleiter 8 ein trichterförmiges, dem in Prozess 5 zugewandter Richtung aufweitendes Abstrahlelement 30 an. Im Fall der Stabantenne ist ein in den Behälter 4 weisender Stab aus einem Dielektrikum als Abstrahlelement 30 vorgesehen. Üblicherweise ist der Innenraum des Hohlleiters 8 von einem dielektrischen Füllkörper 29 nahezu vollständig ausgefüllt. Im Fall der Hornantenne als Abstrahlelement 30 weist der Füllkörper 29 einen kegelförmigen, in den Behälter 4, bzw. zum Prozess 5 weisenden Anpass-kegel auf. Bei Stabantennen wird der dielektrische Füllkörper 29 im Hohlleiter 8 als eine kegelförmige, stabförmige Antenneneinheit 7 weiter in den Prozess 5 geführt.

Aufgrund der Dimensionierung des Hohlleiters 8 und der Dielektrizitätskonstanten des dielektrischen Füllkörpers 29 als Prozesstrennelement sind nur bestimmte Moden im Hohlleiter 8, bzw. der Antenneneinheit 7 ausbreitungsfähig. Im Bereich der Füllstandsmessungen werden bevorzugt Moden mit einer Abstrahlcharakteristik in Form einer ausgeprägten Vorwärtskeule eingesetzt. Bei Rundhohlleitern ist der bevorzugte Mode der transversal-elektrische TE11-Mode.

Im Messumformer 18 ist eine Sende-/Empfangseinheit 20 vorgesehen, in der die Mikrowellen-Messsignale 6 erzeugt werden. Über ein Einkoppelelement 24 werden die Mikrowellen-Messsignale 6 in den Hohlleiter 8 eingekoppelt. Das Einkoppelelement 24 ist über eine Glasdurchführung 25 gasdiffusionsdicht und elektrisch isoliert in den zumeist metallischen Hohlleiter 8 eingebaut. Die in den Hohlleiter 8 der Antenneneinheit 7 eingekoppelten Mikrowellen-Messsignale 6 werden durch einen dielektrischen Füllkörper 29 hindurch von dem Abstrahlelement als Sendesignale S in den Prozessraum 5 mit einer vorgegebenen Abstrahlcharak-teristik abgestrahlt. Meist wird eine Abstrahlcharakteristik der Mikrowellen-Messsignale 6 mit einer ebenen Wellenfront angestrebt, um Laufzeitunterschiede bei den Reflexionssignalen R zu vermeiden. Die in den Prozess 5 ausgesendeten Mikrowellen-Messsignale 6 werden an der Oberfläche des Mediums 3 reflektiert und nach einer bestimmten Laufzeit wieder von der Sende-/Empfangseinheit 20 empfangen. Über die Laufzeit der Mikrowellen-Messsignale 6 wird der Füllstand 2 des Mediums 3 im Behälter 4 bestimmt.

Die Regel-/Auswerteeinheit 19 im Messumformer 17 hat die Aufgabe, das empfangene Reflektionssignal R des Mikrowellen-Messsignals 6 auszuwerten, indem das Messsignal 6 durch eine Signalverarbeitung und spezielle Signalauswertungs-Algorithmen als eine Echokurve weiterverarbeitet und daraus die Laufzeit, bzw. der Füllstand 2 bestimmt wird.

Die Regel-/Auswerteeinheit 19 kommuniziert über eine Kommunikationsschnittstelle 21 mit einer entfernten Kontrollstelle und/oder mit weiteren Füllstandsmessgeräten 1, die nicht explizit gezeigt sind. Über die Versorgungsleitung 22 kann das Füllstandsmessgerät 1 mit der benötigten Energie versorgt werden. Eine zusätzliche Versorgungsleitung 22 zur Energieversorgung des Füllstandsmess-geräts 1 entfällt, wenn es sich um ein so genanntes Zweileiter-Messgerät handelt, dessen Kommunikation und Energieversorgung über die Kommunikationsleitung 23, bzw. Feldbus ausschließlich und gleichzeitig über eine Zweidrahtleitung stattfindet. Die Datenübertragung, bzw. Kommunikation über den Feldbus erfolgt beispielsweise nach dem CAN-, HART-, PROFIBUS DP-, PROFIBUS FMS-, PROFIBUS PA-, oder FOUNDATION FIELDBUS- Standard.

Durch das Einbringen des dielektrischen Füllkörpers 29 in den Hohlleiter 8 wird der Wellenwiderstand des koaxialen Leitersystems verändert. Um diesen Wellenwiderstand anzupassen, verjüngt sich der Hohlleiter 8 besonders im Anpassbereich. Der dielektrische Füllkörper 29 weist hierzu in Richtung des Einkoppelelements 24 im Hohlleiter 8 einen Anpasskegel mit einer kegelförmigen Form auf.

Der dielektrische Füllkörper 29 liefert weiter den Vorteil, dass die Elektronik und der Messumformer 18 abgenommen werden können, da in einer ersten Sicherheitsstufe die messinaktiven Teile der Antenneneinheit 7, wie beispielsweise eine nicht explizit gezeigte Flanschplattierung des Füllkörper 29, den Prozess nach außen hin abschließen und zusätzliche Dichtelemente (14,15,16) eine weitere, bzw. eine zweite Sicherheitsstufe (second line of defence) ausbilden. Dadurch ist es möglich, bei einer Umrüstung oder Reparatur des Füllstandsmessgeräts 1 den Messumformer 17 auf die Antenneneinheit 7 im geschlossenen Prozess 5 zu montieren. Je nach Ausführung und Anwendung kann das Füllstandsmessgerät 1 aus unterschiedlichen Modulen zusammengesetzt werden, so dass beispielsweise eine Umrüstung des Füllstandsmessgeräts 1 auf eine andere Einkoppelungsart, z.B. Stufen- oder Stifteinkopplung, oder eine andere Frequenz, z.B. 6 GHz oder 26 GHz, durch die Trennmöglichkeit der aktiven Teile von den passiven Teilen auch im geschlossenen Prozess möglich ist.

Standardgemäß wird in Hochtemperatur-Anwendungen der Füllstandsmesstechnik ein temperaturbeständiges und mikrowellendurchlässiges Material, beispielsweise Aluminiumoxid-Keramik, Bornitrid-Keramik oder Polyetheretherketon-Kunststoffe, als dielektrischer Füllkörper 29 verwendet.

Aufgrund der Dimensionierung des Hohlleiters 8 und der Dielektrizitätskonstanten des dielektrischen Füllkörpers 29 sind nur bestimmte Grundmoden, z.B. TE11, ausbreitungsfähig. Für die Füllstandsmessungen sind bevorzugt Moden mit einer Abstrahlcharakteristik in Form einer ausgeprägten Vorwärtskeule, bei Rundhohlleitern z.B. der transversal-elektrische TE11-Mode einzusetzen.

Fig. 2 zeigt ein zweites Ausführungsbeispiel des erfindungsgemäßen Füllstandsmessgeräts 1 der Prozessmesstechnik, das zur Ermittlung des Füllstands 2 in einem Behälter 4 eingesetzt wird. Im Gegensatz zur in Fig. 1 gezeigten Ausführung der erfindungsgemäßen Lösung wird hier als Sensorelement 17 eine Messsonde 31 verwendet. Solche Messsonden 31 werden bei Zeitbereichsreflektometern eingesetzt, die die Mikrowellen nicht frei in den Prozessraum 5 abstrahlen, sondern die Mikrowellen als Messsignale 6 entlang einer leitfähigen Messsonde 31 führen.

Im Falle eines Zeitbereichsreflektometers bildet die Messsonde 31 mit dem Hohlleiter ein koaxiales Leitungsgebilde, dessen Hohlräume mit einem dielektrischen Füllkörper ausgefüllt sind.

Desweiteren kann ein solcher Aufbau des Sensorelements 17 mit einer Messsonde 31 in Füllstandsmessgeräten 1 eingesetzt werden, die nach einem kapazitiven und/oder konduktiven Messprinzip arbeiten.

In den Ausführungsbeispielen in den Fig. 1 und Fig. 2 ist erfindungsgemäß an zumindest einer Grenzstelle 13 im Hohlleiter 8 zumindest ein erstes Dichtelement 14 als Mikrowellen-Prozessdichtung zwischen dem Einkoppelelement 24 der koaxialen Signalführung im Hohlleiter 8 und der abstrahlenden Antenneneinheit 7, z.B. eine Hornantenne, angeordnet. Dieses erste Dichtelement 14 soll verhindern, dass Medium 3, bzw. Kondensat in den Hohlleiter 8 eindringen kann, und dadurch die Ausbreitungseigenschaften der Mikrowellen im Hohlleiter 8 verändert werden und die Abstrahlcharakterisitik beeinflusst wird.

Zur Erhöhung der Sicherheit der Dichtigkeit der koaxialen Prozesseinkopplung 26 werden diese Dichtelemente oft mehrmalig in dem Sensorelement 17 ausgeführt. Zu dem ersten Dichtelement 14 wird in diesen Fällen aus sicherheitstechnischer Sicht zwischen der Innenwand des Hohlleiters 8 und dem Füllkörper 29 ein zweites Dichtelement 15 und/oder ein drittes Dichtelement 16 ausgestaltet.

Dieses erste Dichtelement 14 wird auch bei weiteren Arten von Antenneneinheiten 7, wie z.B. Stabantennen, Planarantennen, Parabolantennen, und in Messsystemen der Zeitbereichsreflektometrie, die mit einer an einem Wellenleiter bzw. Messsonde 31 geführten Mikrowelle arbeiten, eingesetzt.

Der Hohlleiter 8 der Antenneneinheit 7 dient nicht nur zur Signalleitung und zur Aufnahme für den dichtenden dielektrischen Füllkörper 29, sondern auch als thermische Entkopplung zwischen dem im Hochtemperatur-Prozess 5 befindlichen heißen Prozessflansch, bzw. Antenneneinheit 7 und dem temperaturempfindlichen Messumformer 18, samt Elektronik aus Regel-/Auswerteeinheit 19, Sende-/Empfangseinheit 20 und Kommunikationsschnittstelle 21.

Als Dichtelemente 14, 15 werden für niedrige Temperaturen von maximal 200°C ausgelegte O-Ring-Dichtungen aus beispielsweise Fluor-Kautschuk, Fluorkarbon-Kautschuk, Tetrafluorethylen und/oder Perfluorpropylen verwendet. Diese Dichtelemente 14, 15 dichten den eventuellen Hohlraum zwischen dem Hohlleiter 8 und dem dielektrischen Füllkörper 29, sowie zwischen dem dielektrischen Füllkörper 29 und der Messsonde 31 ab.

Wie schon erwähnt, wird erfindungsgemäß das Temperaturproblem nun so gelöst, dass man den thermischen Widerstand zwischen den Dichtelementen 14, 15 und Prozess 5 möglichst groß und gleichzeitig denjenigen thermischen Widerstand zwischen Dichtelement und Messumformer, bzw. Umgebung möglichst klein wählt. Der thermische Widerstand des Messumformers ist in der Regel vorgegeben und nicht veränderbar.

Die Umsetzung der Lösung des Problems erreicht man, wie schon zuvor erwähnt, durch entsprechende Längenveränderungen und Querschnittsveränderungen 27, 28 im ersten Bereich 9 und/oder im zweiten Bereich 10 des Hohlleiters 8 unter Berücksichtigung der speziellen Druck- und Temperaturspezifikation des Sensorelements 17. Unter Beachtung der speziellen Druck- und Temperaturspezifikationen wird verstanden, dass beispielsweise beim Hohlleiter 8 im ersten Bereich 9 nur in dem Maße die erste Querschnittfläche 27 reduziert wird, dass er den in der Spezifikation des Messgerätes 1 unter Berücksichtigung von Sicherheitsreserven festgelegten maximalen Druckwerten und maximalen Temperaturen standhält und sich nicht verformt.

Zusätzlich zum ersten Dichtelement 14 kann beispielsweise noch ein zweites Dichtelement 15 als zusätzliche Prozessabdichtung im Sensorelement 17 vorgesehen sein. Dieses zweite Dichtelement 15 ist bei Verwendung in einem Hohlleiter 8 eines Füllstandsmessgeräts 1 in einem Abstand von einem Viertel der Wellenlänge des Mikrowellen-Messsignals 6 zum ersten Dichtelement 14 platziert.

Diese beiden Dichtelemente 14,15 sind beispielsweise als Niedrigtemperatur-O-Ring-Dichtungen aus Fluor-Kautschuk, Fluorkarbon-Kautschuk, Tetrafluorethylen und/oder Perfluorpropylen ausgelegt. Diese Elastomere sind im Temperaturbereich > 200°C nicht dauerbeständig, wodurch sie in diesem Temperaturbereich sehr schnell Alterungserscheinungen zeigen und demzufolge Undichtigkeitserscheinungen aufweisen. Durch die erfindungsgemäße Ausgestaltung des Sensorelements 17 mit einer Grenzstelle 13 zwischen einem hohen thermischen Widerstand 11 in einem dem Prozess 5 nahen, ersten Bereich 9 und einem zumindest zweimal niedrigeren thermischen Widerstand im zweiten Bereich 10 wird die Temperatur sehr stark bis zu dieser Grenzstelle 13 herabgesetzt und vermindert.

Beispielsweise ist für ein Füllstandsmessgerät 1 mit einem Frequenzbereich von 26 GHz ein Sensorelement 17 mit einem dielektrischen Füllkörper 29 aus dem Elastomeren Polyetheretherketon als Prozesstrennung im Hohlleiter 8 ausgestaltet, das für eine maximale Einsatztemperatur von 250°C im Prozess 5 spezifiziert ist.

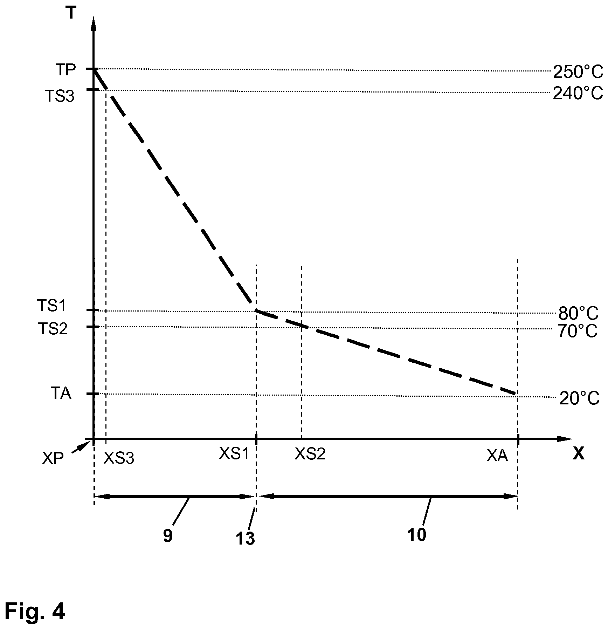

Durch eine optimierte Auslegung des Hohlleiters 8 gemäß der Erfindung lässt sich die Temperatur im Dichtbereich an der Grenzstelle 13 zwischen dem ersten Bereich 9 und zweiten Bereich 10 des Hohlleiters 8, die nur 50 mm vom 250°C heißen Prozessanschluss 35 entfernt ist, auf unter 80°C reduzieren, was in Fig. 4 gezeigt ist. Dadurch ist der Einsatz kostengünstiger Elastomerdichtungen möglich und die Lebensdauer und Dichteigenschaften der O-Ringe werden erheblich verbessert. Außerdem kann das Sensorelement 17 in einer viel kompakteren Bauweise ausgeführt werden, da die Länge des ersten Bereiches 9 durch diese Ausgestaltung verkürzt wird.

Desweiteren kann als drittes Dichtelement 16 in Nähe des Prozesses 5 am Sensorelement 17 ein zusätzliches hochtemperaturbeständiges Dichtelement, insbesondere eine Graphitstopfbuchspackung, vorgesehen sein. Dieses dritte Dichtelement 16 verhindert, dass Medium 5 in den Spalt zwischen Hohlleiter 8 und dielektrischen Füllkörper 29 im ersten Bereich 9 gelangt. Jedoch sind diese Graphitstopfbuchspackungen bei hohen Temperaturen nicht vollständig dicht, da die Permeation von Prozessmedium durch die Graphitstopfpackung bei höheren Temperaturen nicht mehr vernachlässigbar ist. Trotzdem verhindert dieses dritte Dichtelement 16, dass das Medium 3 ungehindert in einen möglichen Spalt zwischen dielektrischem Füllkörper 29 und Hohlleiter 8 im ersten Bereich 9 eindringt und Störungen in der Ausbreitung des Messsignals 6, oder einen chemischen Angriff der Elastomerdichtungen 14,15 verursachen kann.

In Fig. 3 ist eine schematische Darstellung eines erfindungsgemäßen Sensorelements 17 des ersten Ausführungsbeispiels eines Füllstandsmessgeräts 1 der Prozessmesstechnik mit einer Hornantenne als Abstrahlelement 30 der Antenneneinheit 7, aus der Fig. 1 gezeigt.

Die Antenneneinheit 7 ist über einen Prozessanschluss 35 auf den Behälter 4 montiert und mit dem Abstrahlelement 30, insbesondere einer Hornantenne, verbunden. Die Mikrowellen-Messsignale 6 werden vom Messumformer 18 über eine Koaxialleitung zum Einkoppelelement 24 geführt und in den Hohlleiter 8 ausgesendet. Der Hohlleiter 8 ist mit einem dielektrischen Füllkörper als Prozesstrennelement zumindest teilweise gefüllt. Zur Anpassung der Wellenwiderstände im nicht gefüllten und gefüllten Hohlleiter 8 sind Anpasselemente beispielsweise in Form von Anpasskegeln am dielektrischen Füllkörper 29 in beiden Richtungen vorgesehen.

Der dielektrische Füllkörper 29 ist mittels zumindest eines ersten Dichtelements 14 abdichtend in den Hohlleiter 8 eingebracht. Erfindungsgemäß weist das Sensorelement an der ersten Dichtposition XP1 des ersten Dichtelements 14 eine Grenzstelle 13 zwischen einem ersten Bereich 9 mit einem hohen thermischen Widerstand 11 und einem zweiten Bereich 10 mit einem niedrigen thermischen Widerstand 12 auf. Der dem Prozess 5 zugewandte erste Bereich 9 ist so ausgestaltet, dass der erste Querschnitt 27 des Sensorelements 7 unter Berücksichtigung der Temperatur- und Druckspezifikationen des Messgeräts 1 verringert ist. Die Reduzierung des ersten Querschnitts 27 kann nur in dem Maße durchgeführt werden, wie das Sensorelement diesen hohen Prozessdrücken noch standhält. Mittels der Reduzierung des ersten Querschnitts 27 wird somit eine Erhöhung des thermischen Widerstandes 11 in diesem ersten Bereich 9 erreicht. Die zusätzlichen, kreisförmigen Kühllamellen haben hierbei nur einen geringen Einfluss auf die Temperaturreduktion in diesem Bereich und unterliegen größtenteils designerischen Aspekten. Eine weitere Erhöhung des thermischen Widerstandes 11 wird auch zusätzlich durch eine Verlängerung des ersten Bereichs 9 erreicht. Im zweiten Bereich 10, nach der Grenzstelle 13, wird die zweite Querschnittsfläche 28 des Sensorelements auf die größtmöglichsten Dimensionen ausgedehnt, wodurch eine sprungartige Erniedrigung des thermischen Widerstandes 12 erreicht wird. Dieser Unterschied in den thermischen Widerständen 11, 12 kann zusätzlich oder allein durch eine Änderung des Materials mit verschiedenen spezifischen Wärmeleitfähigkeitskonstanten erreicht werden. Der hohe thermische Widerstand 11 im ersten Bereich 9 sollte gegenüber dem niedrigen thermischen Widerstand 12 im zweiten Bereich 10 des Sensorelements mindestens doppelt so groß ausgelegt sein. Wichtig ist, dass die beiden Voraussetzungen, dass der thermische Widerstand 11 im ersten Bereich 9 möglichst groß und der niedrige thermische Widerstand 12 möglichst klein ist, gleichzeitig erfüllt werden.

Zusätzlich kann ein zweites Dichtelement 15 als Sicherheitsdichtelement in Prozess 5abgewandter Richtung hinter dem ersten Dichtelement 14 eingefügt werden. Wird die erfindungsgemäße Dichtungsgeometrie in einem Füllstandsmessgerät 1, das den Füllstand mittels der Laufzeit von Mikrowellen-Messsignalen 6 ermittelt, eingesetzt, ist dieses zweite Dichtelement 15 in einem Abstand von einem Viertel der Wellenlänge des Messsignals 6 zum ersten Dichtelement angeordnet.

Desweiteren kann ein drittes Dichtelement 16 in der Nähe des Prozesses 5 als beispielsweise Graphitstopfbuchspackung vorgesehen werden, wodurch verhindert wird, dass das Medium 3 in einem möglichen Spalt zwischen dem dielektrischen Füllkörper 29 und dem Hohlleiter 8 bis zu dem ersten Dichtungselement 14 vordringen kann.

Der Wärmefluss zwischen Prozess 5 über das Sensorelement und über den Messumformer 18 zur Umgebung lässt sich als einfache Serienschaltung und Parallelschaltung von thermischen Widerständen $R_{th}$ darstellen.

Im ersten Bereich 9 setzt sich der hohe thermische Widerstand 11 aus einer Parallelschaltung des Wärmewiderstands der Wärmeleitung $R_{th, conduct}$ und des Wärmewiderstands der Wärmestrahlung und Konvektion $R_{th, rad+conv}$ zusammen.

Im zweiten Bereich 10 ist der niedrige thermische Widerstand 12 durch eine Reihenschaltung des Wärmewiderstands im Hohlleiter $R_{th, waveguide}$ und des Wärmewiderstand über den Messumformer zur Umgebung $R_{th, ambient}$ darstellbar.

Durch diesen thermischen Spannungsteiler der thermischen Widerstände $R_{th}$ lässt sich für die maximale Temperatur TS1 am ersten Dichtungselement 14 die folgende Formel aufstellen:

$$TS1 = TP - (TP - TA) \cdot \frac{\left( \dfrac{R_{th,conduct.} \cdot R_{th,rad.+conv.}}{R_{th,conduct.} + R_{th,rad.+conv.}} \right)}{R_{th,ambient} + R_{th,waveguide} + \left( \dfrac{R_{th,conduct.} \cdot R_{th,rad.+conv.}}{R_{th,conduct.} + R_{th,rad.+conv.}} \right)}$$

Die maximale Prozesstemperatur TP und die maximale Umgebungstemperatur TA müssen zur Berechnung bekannt sein.

Durch die erfindungsgemäße Ausgestaltung des Sensorelements wird eine Minimierung der Temperatur im Dichtungsbereich bei gleichzeitig kompakter Bauweise und guter HF-Performance erreicht.

In Fig. 4 ist eine schematische Darstellung eines Temperaturprofils des Sensorelements aus Fig. 3 gezeigt. Auf der Abszisse ist die Position X der einzelnen Messstellen der Temperatur T aufgetragen und auf der Ordinate ist die dazu-gehörige Temperatur angezeigt.

Ausgehend von der Prozessposition XP mit der Prozesstemperatur TP von beispielsweise 250 Grad Celsius sinkt die Temperatur T bis zur Grenzstelle 13 und ersten Dichtungsposition XS1 mit einer großen Änderungsrate auf die erste Dichtungstemperatur TS1, wie z.B. 80 Grad Celsius, ab. Unterhalb der Grenzstelle 13, bzw. der ersten Dichtungsposition XS1 wird die Änderungsrate geringer. An der zweiten Dichtungsposition XS2 ist die zweite Dichtungstemperatur TS2 auf beispielsweise 70 Grad Celsius abgesunken. Bis zur Umgebungstemperatur TA bei der Umgebungsposition XA sinkt die Temperatur T weiter auf ca. 20 Grad Celsius ab.

An der dritten Dichtungsposition XS3 ist die Graphitstopfbuchspackung eingebaut, auf die mit einer dritten Dichtungstemperatur TS3 von beispielsweise 240 Grad Celsius nahezu die vollständige Prozesstemperatur TP einwirkt. Durch die hohe Temperatur sind diese prozessnahen Dichtungen sehr störanfällig.

Elastomere im Temperaturbereich von über 200°C sind nicht dauerbeständig und neigen daher sehr schnell zu Alterungs- und Undichtigkeitserscheinungen.

Bei Graphitstopfbuchspackungen tritt das Problem auf, dass insbesondere bei hohen Temperaturen die Dichtheit aufgrund von Permeation des Prozessmediums abnimmt.

**Bezugszeichenliste**

| 1 | Messgerät, Füllstandsmessgerät |
|---|---|
| 2 | Füllstand |
| 3 | Medium |
| 4 | Behälter |
| 5 | Prozess, Prozessraum |
| 6 | Mikrowellen, Mikrowellen-Messsignal |
| 7 | Antenneneinheit |
| 8 | Hohlleiter |
| 9 | erster Bereich |

| 10 | zweiter Bereich |
|---|---|
| 11 | hoher thermischer Widerstand |
| 12 | niedriger thermischer Widerstand |
| 13 | Grenzstelle |
| 14 | erstes Dichtelement |
| 15 | zweites Dichtelement |
| 16 | drittes Dichtelement |
| 17 | Sensorelement |
| 18 | Messumformer |
| 19 | Regel-/Auswerteeinheit |
| 20 | Sende-/Empfangseinheit |
| 21 | Kommunikationsschnittstelle |
| 22 | Versorgungsleitung |
| 23 | Kommunikationsleitung |
| 24 | Einkoppelelement, Erregerelement |
| 25 | Glasdurchführung |
| 26 | koaxiale Prozesseinkopplung |
| 27 | erste Querschnittsfläche |
| 28 | zweite Querschnittsfläche |
| 29 | dielektrischer Füllkörper |
| 30 | Abstrahlelement |
| 31 | Messsonde |
| 32 | temperaturempfindliches Element |
| 33 | elektrische Steckverbindung |
| 34 | elektronisches Bauelement |
| 35 | Prozessanschluss |
| X | Position |
| XA | Umgebungsposition |
| XS1 | erste Dichtungsposition |
| XS2 | zweite Dichtungsposition |
| XS3 | dritte Dichtungsposition |
| XP | Prozessposition |
| XR | Einkoppelposition |
| T | Temperatur |
| TA | Umgebungstemperatur |
| TS1 | erste Dichtungstemperatur |
| TS2 | zweite Dichtungstemperatur |
| TS3 | dritte Dichtungstemperatur |
| TP | Prozesstemperatur |
| TR | Referenztemperatur |
| $R_{th}$ | Wärmewiderstand |
| $R_{th, conduct}$ | Wärmewiderstand der Wärmeleitung |
| $R_{th, rad+conv.}$ | Wärmewiderstand der Wärmestrahlung und Konvektion |
| $R_{th, waveguide.}$ | Wärmewiderstand im Hohlleiter |
| $R_{th, ambient}$ | Wärmewiderstand über den Messumformer zur Umgebung |
| S | Sendesignal |
| R | Empfangssignal |

## Patentansprüche

1. Messgerät der Prozessautomatisierungstechnik zur Ermittlung und Überwachung einer chemischen oder physikalischen Prozessgröße in einem Hochtemperatur-Prozess (5) in einem Behälter(4), wobei das Messgerät (1) ein Sensorelement (17), welches zumindest bereichsweise der im Prozess (5) vorliegenden Temperatur ausgesetzt ist, ein temperaturempfindliches, erstes Dichtelement (14) und einen außerhalb des Prozesses (5) befindlichen Messumformer (18) umfasst,
**dadurch gekennzeichnet,**
**dass** das Sensorelement (17) eine Grenzstelle (13), an welcher das temperaturempfindliche, erste Dichtelement (14) angeordnet ist, aufweist zwischen einem dem Prozess (5) zugewandten, ersten Bereich (9) des Sensorelements (17), der mit einem ersten thermischen Widerstand (11) ausgestaltet ist, sowie einem dem Prozess (5) abgewandten, zweiten Bereich (10) des Sensorelements (17), der einen im Vergleich zum ersten thermischen Widerstand (11) verringerten, zweiten thermischen Widerstand (12) aufweist, wobei der zweite thermische Widerstand (12) im Vergleich zum ersten thermischen Widerstand (11) verringert ist, indem der zweite Bereich (10) im Vergleich zu einer Querschnittsfläche (27) des ersten Bereichs (9) eine vergrößerte Querschnittsfläche (28) aufweist.

2. Messgerät nach Anspruch 1,
**dadurch gekennzeichnet,**
**dass** an der Grenzstelle (13) das Verhältnis zwischen dem hohen thermischen Widerstand (11) im ersten Bereich (9) des Sensorelements (17) und dem niedrigen thermischen Widerstand (12) im zweiten Bereich (10) des Sensorelements (17) zumindest einen Wert von zwei oder größer aufweist.

3. Messgerät nach zumindest einem der vorhergehenden Ansprüche,
**dadurch gekennzeichnet,**
**dass** der erste Bereich (9) und der zweite Bereich (10) des Sensorelements (17) einteilig aus einem Material mit einer spezifischen Wärmeleitfähigkeitskonstanten ausgestaltet sind.

4. Messgerät nach zumindest einem der Ansprüche 1 bis 3,
**dadurch gekennzeichnet,**
**dass** der zweite Bereich (10) des Sensorelements (17) und der erste Bereich (9) des Sensorelements (17) durch die Verwendung von unterschiedlichen Materialien mit verschiedenen spezifischen Wärmeleitfähigkeitskonstanten ausgestaltet sind.

5. Messgerät nach zumindest einem der Ansprüche 1 oder 2,
**dadurch gekennzeichnet,**
**dass** zumindest eine elektrische Steckverbindung und/oder ein elektronisches Bauelement an der Grenzstelle (13) zwischen dem zweiten Bereich (10) des Sensorelements (17) und dem ersten Bereich (9) des Sensorelements (17) ausgestaltet ist.

6. Messgerät nach einem der vorhergehenden Ansprüche,
**dadurch gekennzeichnet,**
**dass** das Messgerät (1) ein Füllstandsmessgerät ist, das den Füllstand eines

Mediums mittels der Laufzeit von Mikrowellen-Messsignalen (6) ermittelt, und ein zweites Dichtelement (15) in einem Abstand von einem Viertel der Wellenlänge der Mikrowellen-Messsignale (6) zum ersten Dichtelement (14) angeordnet ist.

7. Messgerät nach zumindest einem der vorhergehenden Ansprüche,
**dadurch gekennzeichnet,**
**dass** zumindest das erste Dichtelement (14) und/oder zweite Dichtelement (15) als Niedrigtemperatur-O-Ring-Dichtung aus beispielsweise Fluor-Kautschuk, Fluorkarbon-Kautschuk, Tetrafluorethylen und/oder Perfluorpropylen ausgestaltet ist.

8. Messgerät nach zumindest einem der Ansprüche 1, 2 oder 5,
**dadurch gekennzeichnet,**
**dass** ein drittes Dichtelement (16), insbesondere eine Graphitstopfpackung in der Nähe des Prozesses (5) am Sensorelement (17) als ein zusätzliches Sicherheits-Dichtelement angeordnet ist.

9. Messgerät nach zumindest einem der vorhergehenden Ansprüche,
**dadurch gekennzeichnet,**
**dass** das Sensorelement (17) als Antenneneinheit (7) mit zumindest einem Hohlleiter (8) zur Bestimmung des Füllstandes (2) eines Mediums (3) in einem Behälter (4) ausgestaltet ist, dessen Hohlraum durch einen dielektrischen Füllkörper (29) zumindest teilweise ausgefüllt ist und dass die Dichtelemente (14, 15, 16) des Sensorelements (17) zwischen dem Hohlleiter (8) und dem Füllkörper (29) ausgestaltet sind.

10. Messgerät nach zumindest einem der Ansprüche 1 bis 6,
**dadurch gekennzeichnet,**

**dass** das Sensorelement (17) als Sondeneinheit mit zumindest einer Messsonde (31) zur Bestimmung des Füllstandes (2) eines Mediums (3) in einem Behälter (4) ausgestaltet ist und dass die Dichtelemente (14, 15, 16) des Sensorelements (17) zwischen der Messsonde (31) und einer koaxialen Prozesseinkopplung (26) ausgestaltet sind.

**Claims**

1. Measuring device used in process automation engineering to determine and monitor a chemical or physical process variable in a high-temperature process (5) in a vessel (4), wherein the measuring device (1) comprises a sensor element (17), which is exposed at least in sections to the temperature present in the process (5), a temperature-sensitive first sealing element (14) and a transmitter (18) located outside the process (5),
   **characterized in that**
   the sensor element (17) comprises an interface (13), at which the temperature-sensitive first sealing element (14) is located, between a first zone (9) of the sensor element (17) facing towards the process (5), which is fitted with a first thermal resistor (11), and a second zone (10) of the sensor element (17) facing away from the process (5), which has a second thermal resistor that is reduced in relation to the first thermal resistor (11), the second thermal resistor (12) being reduced in relation to the first thermal resistor (11) **in that** the second zone (10) has a larger cross-sectional area (28) compared to a cross-sectional area (27) of the first zone (9).

2. Measuring device as claimed in Claim 1,
   **characterized in that**
   at the interface (13), the ratio of the high thermal resistor (11) in the first zone (9) of the sensor element (17) to the low thermal resistor (12) in the second zone (10) of the sensor element (17) has at least a value of two or more.

3. Measuring device as claimed in at least one of the previous claims,
   **characterized in that**
   the first zone (9) and the second zone (10) of the sensor element (17) are made from a single piece and from a material with a specific thermal conductivity constant.

4. Measuring device as claimed in at least one of the Claims 1 to 3,
   **characterized in that**
   the second zone (10) of the sensor element (17) and the first zone (9) of the sensor element (17) are implemented using different materials with different specific thermal conductivity constants.

5. Measuring device as claimed in at least one of the Claims 1 or 2,
   **characterized in that**
   at least an electrical plug connection and/or an electronic component is/are fitted at the interface (13) between the second zone (10) of the sensor element (17) and the first zone (9) of the sensor element (17).

6. Measuring device as claimed in at least one of the previous claims,
   **characterized in that**
   the measuring device (1) is a level measuring device that determines the level of a medium by means of the transit time of microwave measuring signals (6), and **in that** a second sealing element (15) is arranged at a distance of a quarter of the wavelength of the microwave measuring signals (6) to the first sealing element (14).

7. Measuring device as claimed in at least one of the previous claims,
   **characterized in that**
   at least the first sealing element (14) and/or the second sealing element (15) is/are designed as a low-temperature O-ring seal made, for example, from fluorinated rubber, fluorocarbon rubber, tetrafluoroethylene and/or perfluoropropylene.

8. Measuring device as claimed in at least one of the Claims 1, 2 or 5,
   **characterized in that**
   a third sealing element (16), particularly a graphite packing, is arranged as an additional safety sealing element in the vicinity of the process (5) at the sensor element (17).

9. Measuring device as claimed in at least one of the previous claims,
   **characterized in that**

the sensor element (17) is designed as an antenna unit (7) with at least a waveguide (8) designed to determine the level (2) of a medium (3) in a vessel (4), whose cavity is at least partially filled in by a dielectric filling body (29) and

**in that** the sealing elements (14, 15, 16) of the sensor element (17) are arranged between the waveguide (8) and the filling body (29).

10. Measuring device as claimed in at least one of the Claims 1 to 6,
**characterized in that**

the sensor element (17) is designed as a probe unit with at least a measuring probe (31) to determine the level (2) of a medium (3) in a vessel (4) and

**in that** the sealing elements (14, 15, 16) of the sensor element (17) are arranged between the measuring probe (31) and a coaxial process coupling (26).

## Revendications

1. Appareil de mesure de la technique d'automatisation des process, lequel appareil est destiné à la détermination et à la surveillance d'une grandeur de process chimique ou physique au sein d'un process à haute température (5) dans un réservoir (4), l'appareil de mesure (1) comprenant un élément capteur (17) qui est exposé au moins par zones à la température présente dans le process (5), un premier élément d'étanchéité (14) sensible à la température et un transmetteur (18) se trouvant à l'extérieur du process (5),
**caractérisé**
**en ce que** l'élément capteur (17) comprend une interface (13) sur laquelle est disposé le premier élément d'étanchéité (14) sensible à la température, entre une première zone (9) de l'élément capteur (1 7) tournée vers le process (5), qui est réalisée avec une première résistance thermique (11), ainsi qu'une deuxième zone (10) de l'élément capteur (17) détournée du process (5), qui présente une deuxième résistance thermique réduite par rapport à la première résistance thermique (11), la deuxième résistance thermique (12) étant réduite par rapport à la première résistance thermique (11) **en ce que** la deuxième zone (10) présente une surface de section transversale (28) agrandie par rapport à une surface de section transversale (27) de la première zone (9).

2. Appareil de mesure selon la revendication 1,
**caractérisé**
**en ce qu'**au niveau de l'interface (13), le rapport entre la résistance thermique élevée (11) dans la première zone (9) de l'élément capteur (17) et la faible résistance thermique (12) dans la deuxième zone (10) de l'élément capteur (17) présente au moins une valeur de deux ou plus.

3. Appareil de mesure selon au moins l'une des revendications précédentes, **caractérisé**
**en ce que** la première zone (9) et la deuxième zone (10) de l'élément capteur (17) sont réalisées d'une seule pièce dans un matériau présentant une constante de conductivité thermique spécifique.

4. Appareil de mesure selon au moins l'une des revendications 1 à 3,
**caractérisé**
**en ce que** la deuxième zone (10) de l'élément capteur (17) et la première zone (9) de l'élément capteur (17) sont réalisées par l'utilisation de matériaux différents présentant des constantes de conductivité thermique spécifiques différentes.

5. Appareil de mesure selon au moins l'une des revendications 1 ou 2,
**caractérisé**
**en ce qu'**au moins une connexion électrique et/ou un composant électronique est réalisé(e) au niveau de l'interface (13) entre la deuxième zone (10) de l'élément capteur (17) et la première zone (9) de l'élément capteur (17).

6. Appareil de mesure selon au moins l'une des revendications précédentes,
**caractérisé**

**en ce que** l'appareil de mesure (1) est un transmetteur de niveau qui détermine le niveau d'un produit au moyen du temps de propagation de signaux de mesure micro-ondes (6), et
**en ce qu'**un deuxième élément d'étanchéité (15) est disposé à une distance d'un quart de la longueur d'onde des signaux de mesure micro-ondes (6) par rapport au premier élément d'étanchéité (14).

7. Appareil de mesure selon au moins l'une des revendications précédentes,
   **caractérisé**
   **en ce qu'**au moins le premier élément d'étanchéité (14) et/ou le deuxième élément d'étanchéité (15) est conçu comme un joint torique à basse température, par exemple en caoutchouc fluoré, en caoutchouc fluorocarboné, en tétrafluoroéthylène et/ou en perfluoropropylène.

8. Appareil de mesure selon au moins l'une des revendications 1, 2 ou 5,
   **caractérisé**
   **en ce qu'**un troisième élément d'étanchéité (16), notamment un presse-garniture en graphite, est disposé à proximité du process (5) sur l'élément capteur (17) en tant qu'élément d'étanchéité de sécurité supplémentaire.

9. Appareil de mesure selon au moins l'une des revendications précédentes,
   **caractérisé**

   **en ce que** l'élément capteur (17) est conçu comme une unité d'antenne (7) avec au moins un conducteur creux (8) destiné à déterminer le niveau (2) d'un produit (3) dans un réservoir (4), conducteur creux dont l'espace creux est rempli au moins partiellement par un corps de remplissage diélectrique (29) et
   **en ce que** les éléments d'étanchéité (14, 15, 16) de l'élément capteur (17) sont conçus entre le conducteur creux (8) et le corps de remplissage (29).

10. Appareil de mesure selon au moins l'une des revendications 1 à 6,
    **caractérisé**

    **en ce que** l'élément capteur (17) est conçu comme une unité de sonde avec au moins une sonde de mesure (31) destinée à déterminer le niveau (2) d'un produit (3) dans un réservoir (4) et
    **en ce que** les éléments d'étanchéité (14, 15, 16) de l'élément capteur (17) sont conçus entre la sonde de mesure (31) et un raccord process coaxial (26).

**Fig. 1**

**Fig. 2**

**Fig. 3**

**Fig. 4**

**EP 2 467 683 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030201842 A1
- WO 2009129997 A1
- EP 1869418 A2
- US 2008134778 A1
- US 20050253751 A1